# EUROPEAN PATENT APPLICATION

(11) **EP 2 985 958 A1**
(43) Date of publication of application: **17.02.2016**
(21) Application number: 15174390.3
(22) Date of filing: 02.09.2011
(51) Int. Cl.: H04L 12/58

(54) **DYNAMIC NETWORK ADDRESS TRANSLATION SYSTEM AND METHOD**

(30) Priority: 03.09.2010 EP 10175212
(62) Divisional of application: 11763871.8
(71) Applicant: Adaptive Mobile Security Limited, Dublin 2 (IE)
(72) Inventor: CARR, Hugh, Co Wicklow (IE); BRENDAN, Dillon, Dublin 6 (IE); EDWARDS, Owen, Co Dublin (IE); MACLACHLAN, Gareth, Suffolk, C07 6SU (GB); MCDAID, Cathal, Dublin 5 (IE)
(74) Representative: Lucey, Michael

(57) **Abstract**

The invention provides a system and method for filtering unsolicited network messaging in a network comprising at least one remote messaging device, at least one data routing device and at least one remote destination device. The invention provides a means for determining a probability of the network message being unsolicited; and means for translating a first network address into a second network address associated with unsolicited network messaging when the probability determining means indicates a high probability of unsolicited network messaging. In a further embodiment there is provided a means for translating the first network address into the at least one second network address associated with legitimate network messaging, when the probability determining means indicates a low probability of unsolicited network messaging.

## Description

### Field of the Invention

The present invention relates to improvements in dynamic network address translation. More particularly, the present invention relates to a system and method for translating a network addresses of a network message according to a dynamic classification of the messaging traffic as unsolicited messaging or otherwise.

### Background to the Invention

Network messaging systems are widely known, which allow data messages to be communicated between remote messaging and recipient devices across communication domains, for example e-mail or SMS messages. As messaging traffic transits from one communication domain to another, for instance from an Internet Service Provider ('ISP') or mobile telephone operator to the wider Internet, an originating IP address is normally assigned to this traffic that is relevant in the wider internet domain. That is, the messaging device has a first network address that is relevant in the narrower domain between the messaging device and the ISP or mobile operator, and communicates network messages to a data routing device of the ISP or mobile operator, wherein the routing device translates the first network address into a second network address that is relevant to the next, wider communication domain, and forwards the network message to the recipient device via the wider communication domain.

As the use of personal communicating devices such as computers and mobile phones increases, particularly within vulnerable segments such as minors, ISPs and operators are under pressure from guardians, regulators and their own corporate social responsibility to ensure that the users of mobile data services are able to use the services without cause for concern.

To detect and prevent unsolicited messaging, for instance unsolicited messaging originated by a mobile device compromised by an electronic viral infection, traffic may be subjected to a number of known preventing mechanisms before it is sent on to its intended network destination. Such filtering processes may nevertheless omit or fail to detect a portion of unsolicited messages, the unsolicited messages continuing to their recipients undetected. After filtration, whether successful or not, the traffic is typically assigned a public origination or 'Source' IP address, associated with the ISP or mobile operator.

In an attempt to mitigate the growing concern of unsolicited messages, several entities generate lists of network addresses, which are known to generate unsolicited messaging traffic, such lists being known as Real-Time Black Lists ('RBLs'). If the number of unsolicited messages from a particular IP address or range of IP addresses exceeds a certain amount or threshold, then the IP address or range is included in a RBL and effectively blacklisted, resulting in the automated blocking of genuine network messaging originating from within these ranges. Effectively, given an operator having two subscribers, one whose device has been compromised and the messaging thereof leading to the inclusion of the operator's public IP range in one or more RBLs, and the other whose device has not been compromised, then genuine network messaging from that other, uncompromised subscriber would fail to reach its recipients.

European Patent Publication Number EP 1 724 979, Postini Corporation, discloses a centralised pre-processing electronic messaging solution that performs value added tasks to electronic messages on behalf of an ISP or end user before these messages are delivered to a destination email server (DNS). The Postini system operates by saving 'Bad' emails or messages in quarantine on a message centre web site, and a notification email is sent to the user. The "Bad" messages in the Postini reference are stored in a physically different location which adds to the technical complexity of the system. Therefore the message is being stored in a different location. The message is being transferred physically from one location to another location. This is a physical location transformation. In the illustrated embodiment, the inbound mail server cluster is connected to a file store. The file store is in turn connected to a web server. When a user logs on to the web server, a web page is displayed that includes a link for displaying a summary of quarantined messages and/or attachments. By clicking on a selected item, the user is able to view the item and depending on the attachment type, may be able to view the attachment. If the user so chooses, the user may be allowed to download an item suspected to contain a virus after the user has been given appropriate warning.

A system and method are required, to ensure that unsolicited network messaging generated by one or more subscribers of an operator do not compromise the networking capacity of the operator, so that subscribers of that operator may communicate legitimate network messaging unhindered.

### Summary of the Invention

According to a first aspect of the invention, a system is provided, as set out in the appended claims, for filtering unsolicited network messaging in a network comprising at least one remote messaging device, at least one data routing device and at least one remote destination device, wherein the remote messaging device has a first network address and communicates at least one network message intended to reach the at least one remote destination device to the at least one data routing device, and wherein the at least one data routing device translates the first network address into a second network address and forwards the network message to the at least one remote recipient device. The system comprises means for storing a plurality of second network addresses and means for receiving the at least one network message from the at least one remote data communicating device under the first network address, wherein the first network address comprises the source address of the remote data communicating device. The system is characterised in that it further comprises means for determining a probability of the network message being unsolicited, and means for translating the source network address into a second network address associated with unsolicited network messaging when the probability determining means indicates a high probability of unsolicited network messaging.

The invention relates to the translation of an attribute of the message, in this case the address associated with the message from which the message purported to originate from (source address) is changed from one address to an address associated with unsolicited, legitimate or indeterminate messaging. Source address in this usage can refer to an identifier, a subscriber identifier, a system identifier, a point in the network or an identifier in the message itself. In the context of the present invention the address translation of the first network address into a second network address refers to changing the source network address. It does not involve transferring or moving the message into a separate location, which is how existing prior art systems operate.

The plurality of second network addresses preferably includes at least one second network address associated with potentially legitimate network messaging and at least one second network address associated with potentially unsolicited network messaging, whereby the system may further comprise means for translating the source address into the at least one second network address associated with legitimate network messaging, when the probability determining means indicates a low probability of unsolicited network messaging.

The plurality of second network addresses preferably includes at least one second network address associated with indeterminate network messaging, whereby the system may further comprise means for translating the source address into the at least one second network address associated with indeterminate network messaging, when the probability determining means cannot indicate a probability of unsolicited network messaging.

The means for determining preferably includes a message scanning application and a data table storing respective first network addresses of remote messaging devices, the data table further storing, for each first network address, a variable defining the scanning policy of the message scanning application for any network messaging received from the remote messaging device assigned the first network address.

The means for storing a plurality of second network addresses preferably includes a data table storing second network addresses or ranges of second network addresses, the data table further storing, for each second network address or range thereof, a variable defining the translating policy of the translating means, substantially equivalent to the variable defining the scanning policy of the message scanning application.

Advantageously, the variable defining the scanning policy and the variable defining the translating policy jointly define ranges of second network addresses, categorised according to the likelihood of the network message with which they are associated constituting unsolicited messaging or not.

The storing means, receiving means, determining means and translating means are preferably embodied in a network router. The determining means may be embodied in a packet forwarding engine of the networking router and the translating means can be embodied in a module of the network router that it can be then routed through.

According to another embodiment of the invention the system comprises means for determining a probability of the network message being unsolicited at one communication node. A separate second communication node comprises a means for translating a first network address of the message into a second network address associated with unsolicited network messaging when the probability determining means indicates a high probability of unsolicited network messaging based on the information received about the message from the first communication node. It will be appreciated that the first and second nodes may belong to the same operator or different parties operating across different networks.

In one embodiment there is provided means for identifying a unique subscriber identifier identifying the remote data communicating device.

In one embodiment the unique subscriber identifier comprises a MSISDN of said remote data communicating device.

In one embodiment the means for determining comprises associating the unique subscriber identifier with a policy to determine the means for translating the source address to the second network address.

In one embodiment the means for determining comprises associating the unique subscriber identifier with a reputation variable that determines a message risk level and said means for translating assigns a second network address from a list of second network addresses which corresponds to that message sender's risk level.

In one embodiment the first network address or source address comprises a private IP address temporarily assigned, and is temporarily associated and stored with the source address.

In one embodiment the private IP address is associated with a unique subscriber identifier identified for the remote communicating device.

In one embodiment the unique subscriber identifier comprises a MSISDN of said remote data communicating device.

In one embodiment the means for determining comprises associating the first network address with a reputation variable or policy.

In one embodiment the reputation variable or policy determines the message sender's risk level, resulting in translating the first or source network address to the second network address associated with unsolicited messaging when the reputation variable or policy indicates a high probability of unsolicited network messaging.

In one embodiment the reputation variable or policy determines the message sender's risk level, resulting in translating the first or source network address to the second network address associated with legitimate network messaging when the reputation variable or policy indicates a low probability of unsolicited network messaging.

In one embodiment the reputation variable or policy determines the message sender's risk level, resulting in translating the first or source network address to the second network address associated with indeterminate network messaging when the reputation variable or policy indicates a probability of unsolicited network messaging.

According to a further aspect of the invention, a method of filtering unsolicited network messaging is provided in a networked data routing device, comprising the steps of receiving at least one network message from a remote data communicating device having a first network address, storing a plurality of second network addresses in memory means, determining a probability of the network message being unsolicited, and translating the first network address, wherein the first network address comprises the source address of the remote data communication device, into a second network address associated with unsolicited network messaging when the determining step indicates a high probability of unsolicited network messaging.

The plurality of second network addresses preferably includes at least one second network address associated with legitimate network messaging and at least one second network address associated with unsolicited network messaging, whereby the method may comprise the further step of translating the source address into a second network address associated with legitimate network messaging, when the probability determining means indicates a low probability of unsolicited network messaging.

The plurality of second network addresses preferably includes at least one second network address associated with indeterminate network messaging, whereby the method may comprise the further step of translating the source network address into the at least one second network address associated with indeterminate network messaging, when the probability determining means cannot indicate a probability of unsolicited network messaging.

The method may comprise the further step of storing, for each first network address, a variable defining the scanning policy of a message scanning application for determining the probability of the network message, received from a remote messaging device assigned the first network address, being unsolicited.

The method may comprise the further step of storing, for each second network address or a range thereof, a variable defining the translating policy of a network address translating application for translating the first network address into a second network address.

The method preferably comprises the further step of forwarding the network message with the second network address.

In one embodiment the method comprises the step of identifying a unique subscriber identifier identifying the remote data communicating device.

In one embodiment the unique subscriber identifier comprises a MSISDN of said remote data communicating device.

In one embodiment the step for determining comprises associating the unique subscriber identifier with a policy to determine the translating of the source address to the second network address.

In one embodiment the determining step comprises associating the unique subscriber identifier with a reputation variable that determines a message risk level and said translating assigns a second network address from a list of second network addresses which corresponds to that message sender's risk level.

In one embodiment the first network address or source address comprises a private IP address temporarily assigned, and is temporarily associated and stored with the source address.

In one embodiment the private IP address is associated with a unique subscriber identifier identified for the remote communicating device.

In one embodiment the unique subscriber identifier comprises a MSISDN of said remote data communicating device.

In one embodiment the determining step comprises associating the first network address with a reputation variable or policy.

In one embodiment the reputation variable or policy determines the message sender's risk level, resulting in translating the first or source network address to the second network address associated with unsolicited messaging when the reputation variable or policy indicates a high probability of unsolicited network messaging.

In one embodiment the reputation variable or policy determines the message sender's risk level, resulting in translating the first or source network address to the second network address associated with legitimate network messaging when the reputation variable or policy indicates a low probability of unsolicited network messaging.

In one embodiment the reputation variable or policy determines the message sender's risk level, resulting in translating the first or source network address to the second network address associated with indeterminate network messaging when the reputation variable or policy indicates a probability of unsolicited network messaging.

According to another aspect of the invention, a set of instructions recorded on a carrier or stored in a memory is provided for a programmable networked data processing terminal which, when processed by processing means of the data processing terminal, causes the data processing terminal to perform the steps of the method described above and herein.

### Brief Description of the Drawings

The invention will be more clearly understood from the following description of an embodiment thereof, given by way of example only, with reference to the accompanying drawings, in which:-
Figure 1 shows a networked environment in which the present invention may be used, including a mobile subscriber device and a network router;
Figure 2 illustrates an architecture of the network router of Figure 1, including memory means;
Figure 3 provides a functional illustration of the network router of Figures 1 and 2, including a packet forwarding engine and a processing engine;
Figure 4a illustrates the contents of the memory means shown in Figures 2 and 3 in use, according to one embodiment;
Figure 4b illustrates the contents of the memory means shown in Figures 2 and 3 in use, according to another embodiment;
Figure 5a details the processing steps according to which the packet forwarding engine of Figure 3 operates with data stored in the memory means of Figure 4, including a step of processing a network message with a first network address according to policies, according to one embodiment;
Figure 5b details the processing steps according to which the packet forwarding engine of Figure 3 operates with data stored in the memory means of Figure 4, including a step of processing a network message with a first network address and a unique subscriber identifier according to policies, according to another embodiment;
Figure 6 further details the step of processing message IP addresses according to a first policy associated with legitimate messages;
Figure 7 further details the step of processing message IP addresses according to a third policy associated with unsolicited messages;
Figure 8 further details the step of processing message IP addresses according to a second policy associated with indeterminate messages, according to an alternative embodiment of the invention; and
Figure 9 details the processing steps according to which the processing engine of

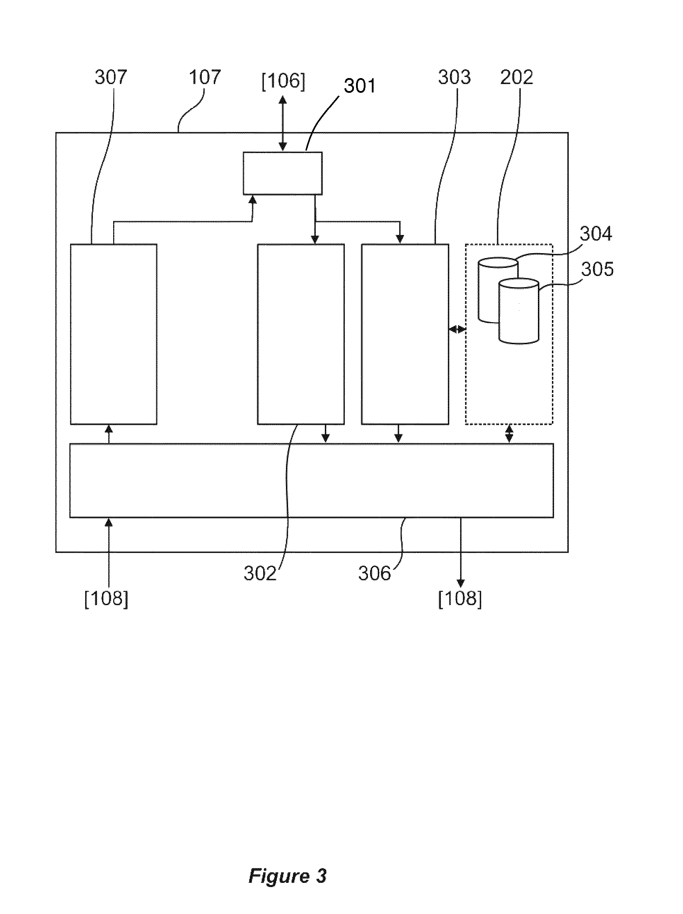

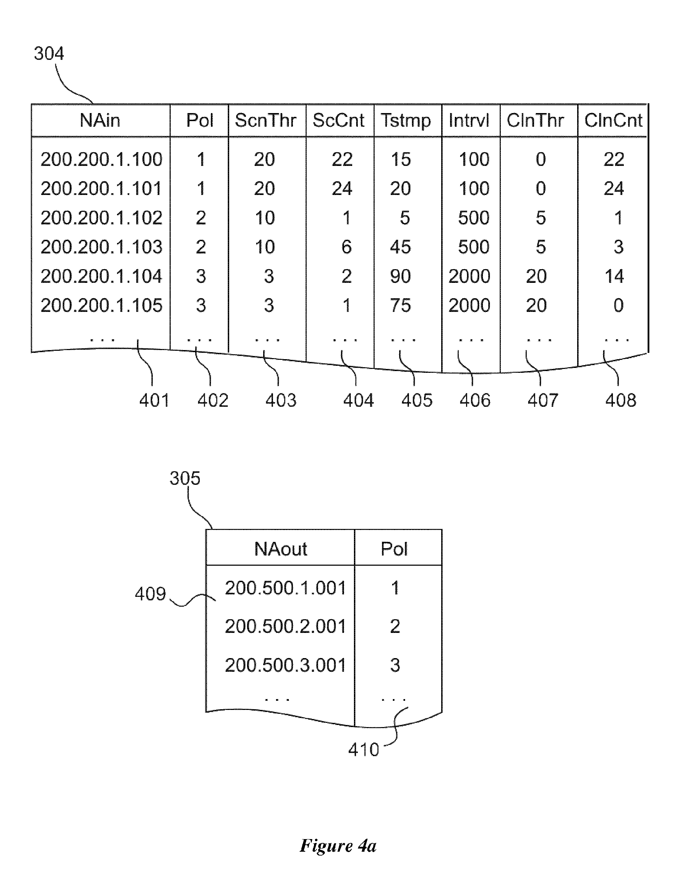

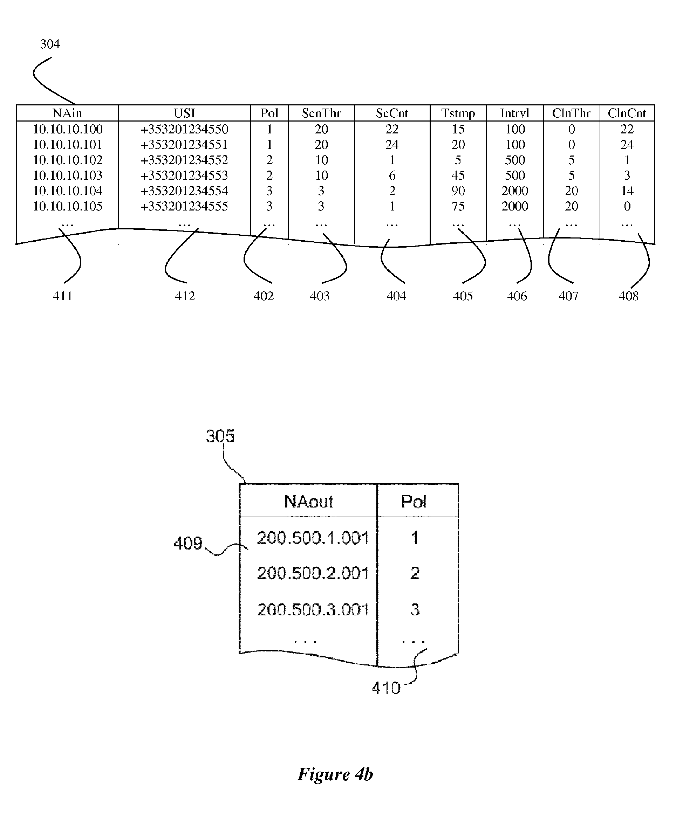

Figure 3 operates with data stored in the memory means of Figure 4a or 4b, including a step of forwarding a network message with a second network address.

### Detailed Description of the Drawings

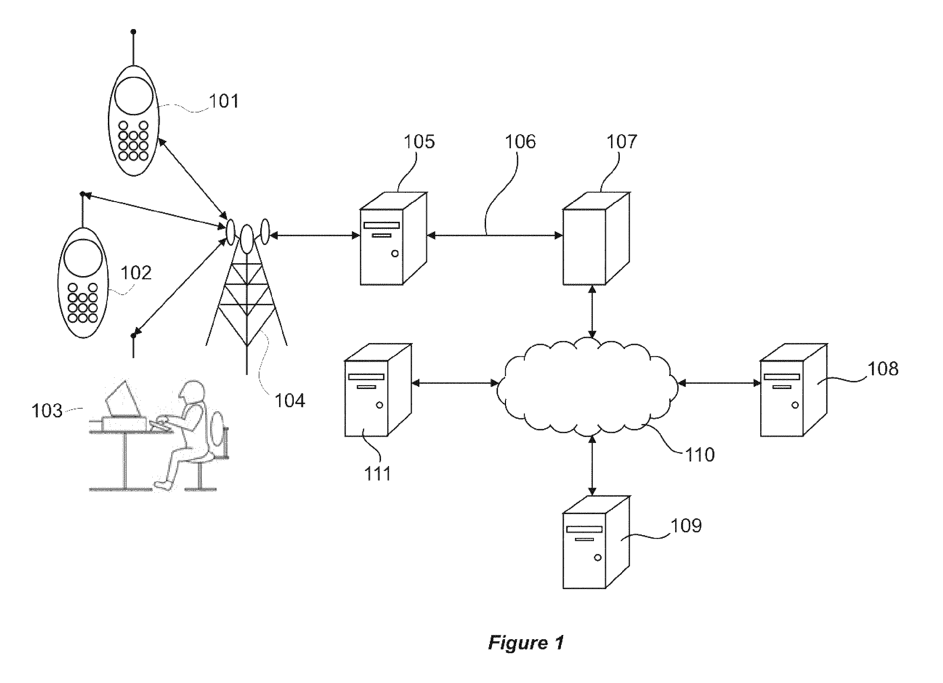

Referring now to the figures and initially Figure 1, there is shown a network environment in which a system according to the invention may be embodied, according to one aspect of the invention.

The environment includes a plurality of remote messaging devices 101, 102, or computer 103, which in the example are mobile telephones 101 and 102 used by respective subscribers of an operator or a computer 103 communicating over a network, for example the internet. It will be appreciated that the devices can be mobile telephones, stand alone desktop PCs or laptops adapted to send data messages over any data network. The mobile telephones are conventional cellular communication devices operating within a conventional cellular communication network, and broadcast voice, text and data to, and receive same from, at least one base station 104. The base station 104 is interfaced with a mobile switching centre ('MSC') 105, which provides links to both a core circuit switched network for handling voice and text and a packet switched network 106 for handling packet-based mobile data. The MSC can be a SGSN/GGSN or any packet switching system that allows access to an IP network. The packet switched network 106 preferably uses the Internet Protocol (IP) for communicating data therein using the Internet Protocol Suite, also referred to as TCP/IP. IP is the primary protocol in the Internet Layer of the Internet Protocol Suite and delivers packets from a source device to a destination device based on their respective network addresses.

The packet switched network 106 includes at least one data routing device 107 for performing network address translation ('NAT') of the respective network addresses of the mobile telephones 101, 102, 103 before the data embodying network messages is forwarded to the intended recipients, in the example destination SMTP email servers 108, 109 across a wide area network 110, for instance the World Wide Web or Internet.

In this configuration, any of data processing terminals 101, 102, 103 may broadcast networking messages to, and receive networking messages from, remote data processing terminals 108, 109 over the wide area network 110, via router 107.

NAT effectively modifies network address information in packets while in transit across the router 107, for remapping one IP address space 106 into another IP address space 110. NAT is routinely used in conjunction with network techniques that hide an entire IP address space, usually consisting of private network IP addresses 106, behind a single secondary IP address in another, often public address space 110. NAT obscures an internal network's structure: all traffic appears to outside parties as if it originated from the network gateway 107.

The network environment further includes a RBL server 111, which compiles Real - Time Black Lists of network addresses within the wide area network 110, which are known to originate unsolicited network messaging, commonly referred to as 'spam'. The RBLs compiled by server 111 are communicated to destination SMTP servers 108, 109 and the like, in order to mitigate the effect of unsolicited messages upon SMTP server storage requirements, performance and quality of service to their users.

Each data processing terminal 101, 102, 103, 107, 108, 109 and 111 includes at least data processing means, specifically at least a microprocessor connected with data storage means; networking means; and optionally user input means, such as an alpha numerical input device and/or a pointing device, and display means to facilitate input, output and interaction of a user with its respective data processing terminal.

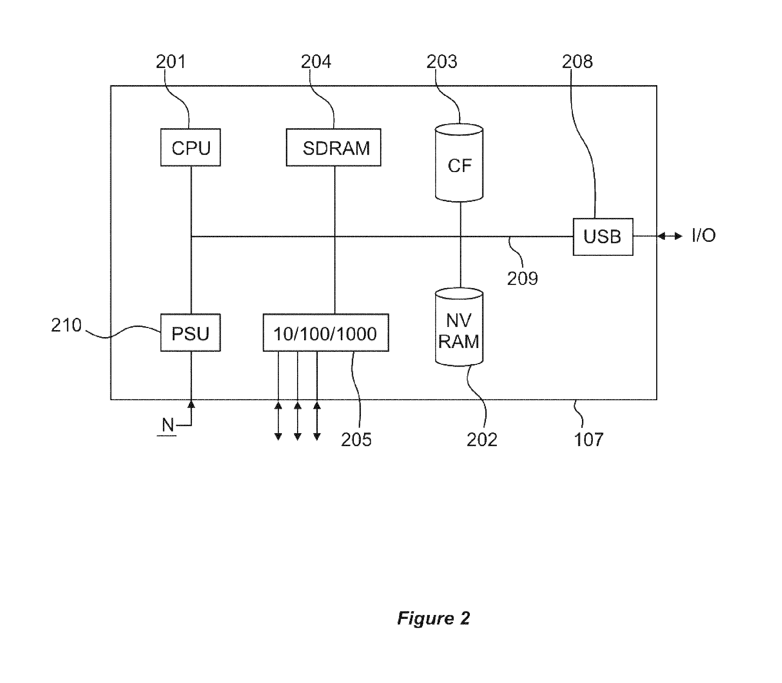

Referring now to Figure 2, there is shown a block diagram of a router 107 for filtering unsolicited network messaging according to an embodiment of the present invention.

The router 107 is a data processing terminal and includes at least one general purpose central processing unit 201. The set of instructions configuring CPU 201 for operation upon start-up and whilst the router is in use is stored in non-volatile random access memory 202, as well as a plurality of data tables storing first and second network addresses and other variables which will be described in further details hereafter. The storing can be implemented in a clustered arrangement. The router 107 includes secondary non-volatile memory means 203, for instance a flash memory module 203, which redundantly stores the same instructions and data as NV RAM 202. The flash memory unit 203 maybe used as a buffer to store upgraded instructions and data, for replacing the instructions and data stored in NV RAM 202. The router 107 further includes volatile random access memory 204, for instance synchronous dynamic RAM for storing incoming and outgoing data packets, respectively received from remote terminals 101, 102, 103 for routing to destination SMTP servers 108, 109 and reciprocally. Incoming and outgoing networking messages, i.e. data packets are respectively input and output to the router 107 via a network interfacing module 205, which may include a plurality of physical Ethernet-type sockets. The router 107 may optionally further include local input and output means, for instance a universal serial bus interface 208 adapted to read data from, and write data to, external and removable flash or non-volatile memory means. All of the above router components are connected to a data bus 209 through which data processed by the CPU 201 transits. Finally, the router 107 and its component 201 to 209 are powered by a power supply unit 210 converting alternative current from a mains supply into direct current usable by the router components.

Figure 3 provides a functional illustration of a network router 107 of Figures 1 and 2. When configured according to a first embodiment of the invention, the router 107 is functionally configured with a plurality of modules for performing both conventional tasks and the network messaging filtering according to the invention. Each subscriber identifier can be assigned a reputation variable as a means for determining the probability of a network message being unsolicited, as described in more detail below.

The forwarding plane defines the part of the router 107 architecture, which decides how to process packets arriving on an inbound interface 301. The passage from the input interface 301 directly to an output interface or module 306, through the router with minimum modification at the output interface 306, is known as the fast path 302 of the router. However, if the packet needs significant processing, it may go through the services plane of the router, known as the slow path 303 router. The forwarding plane functions run in the forwarding element. High-performance routers 107 may have multiple distributed forwarding elements, so that the router increases performance with parallel processing. The outgoing interface 306 will encapsulate the packet in the appropriate data link protocol.

Accordingly, a first module 301 interfaces the router 107 with the internal or private network 106. The module 301 receives data packets from remote mobile devices 101, 102, 103 for routing to remote destination servers 108, 109 and forwards data packets to remote mobile devices 101, 102, 103 routed from remote destination servers 108, 109.

The module 301 selects which of the fast path 302 or the slow path 303 to push the incoming data packets through. If the data packet requires insignificant processing and may be passed substantially directly from the input interface to an output interface with minimal modification, then the module 301 pushes the data packet through the fast path 302. Alternatively, if the data packet requires significant processing, for instance segmentation or encryption, then the module 301 pushes the data packet through the slow path 303, also known as the router service plane. In the present embodiment, filtering of network messaging is performed by the service plane, which the instructions require to access the memory 202, specifically data structures 304 and 305 which respectively store network messaging filtering variables or criteria and second network addresses.

Data packets output by either the fast or slow paths 302, 303 are then filtered by a module 306, which in the present embodiment performs the first to second network address translation as a function of the filtering performed by the service plane 303 and forwards the network messaging out to the wide area network 110 and the destination servers 108, 109.

Finally, a further module 307 receives network messaging data from the wide area network 110 after filtration by the module 306 and performs substantially a network address translation, so that network messaging addressed by a remote terminal 108,109 external to the private network 106 to any subscriber device 101, 102 or 103 and received with a public IP address can be routed back to the correct subscriber device within the private network.

Figure 4a illustrates the contents of the data structures 304, 305 stored in memory means 202, 203 or 204 shown in Figures 2 and 3.

Data structure 304 is a data table listing the network address 401 of subscriber devices 101, 102, 103 within the private network 106. For each network address 401, a message filtering policy variable 402 is stored, which determines the sequence of processing steps applied to network messaging received from the subscriber device assigned that network address. The first network address 401 can act as a subscriber identifier to identify the source device (or remote messaging device).

Further variables are stored for each network address 401, which themselves depend either upon the filtering policy variable 402 or the network messaging activity of the subscriber device. Such variables can include a message scanning threshold 403, which indicates the frequency at which network messages received from a specific subscriber device assigned the network address 401 should be scanned for determining whether a network message is unsolicited; a revolving running count 404 of the number of messages received from a specific subscriber device assigned the network address 401; a time stamp variable 405 indicative of the time at which a message was last received from a specific subscriber device assigned the network address 401; a reset period 406 which, when exceeded by comparison with the time stamp 405, is used to reset or update the message filtering policy variable 402 as will be described in further detail hereafter; a clean message threshold 407, indicative of the number of times a scanned network message received from a specific subscriber device assigned the network address 401 should be legitimate in order to reset or update the message filtering policy variable 402; and a revolving running count 408 of the number of scanned messages received from a specific subscriber device assigned the network address 401 found to be legitimate.

Data structure 305 is a routing table listing second network addresses 409 or ranges of second network addresses 409 into which to translate a first network address 401 or any first network address within a range of same. In the example, individual addresses are shown, however persons skilled in the art may easily implement same as ranges instead, in order to accommodate the scale of the network 106 and number of subscriber devices, each such range having for instance a start first network address 409 and an end first network address.

For each address or range 409, the routing table also stores a message forwarding policy variable 410 corresponding substantially to the message filtering policy variable 402, which in the context of table 305 determines the second, public network address 409 into which to translate the first network address 401, or into which to translate any first network address within a range 401. The message forwarding policy variable 410 defines discrete ranges of second network addresses, categorised according to the likelihood of the network message with which they are associated constituting unsolicited messaging or not.

At its simplest, the message forwarding policy variable 410 effectively defines at least two second network addresses 409A, 409B, into which to translate any first network address of a subscriber device associated with network messaging: one permitted second network address 409A associated with legitimate network messaging, and one interdicted second network address 409B associated with semi-trusted and/or unsolicited network messaging. Those skilled in the art may easily envisage variations on the above, and considered as within the scope of the present disclosure, including for instance further intermediary segments of second network addresses representative of discrete groups of subscriber devices between the extremes of fully - trusted devices and entirely - mistrusted devices, as required by the operator and/or network circumstances.

In the embodiment described, three second network addresses are defined by the message forwarding policy variable 410, which are a permitted second network address 409A, a semi-trusted second network addresses 409C and an interdicted second network address 409B, respectively for translating first network address of trusted, new or semi-trusted and spamming subscriber devices.

Figure 4b illustrates a similar embodiment to Figure 4a, wherein data structure 304 is a data table listing a private network address 411 of subscriber devices 101, 102, 103. For each private network address 411 a corresponding unique subscriber identifier (USI) 412 can be extracted, such as a MSISDN which is a unique subscriber identifier associated with the remote messaging device. Each MSISDN which can be associated with a message filtering policy variable 402 is stored, which determines the sequence of processing steps applied to network messaging received from the subscriber device, and is described in more detail below. The private network address 411 can be a temporary IP address assigned by the system.

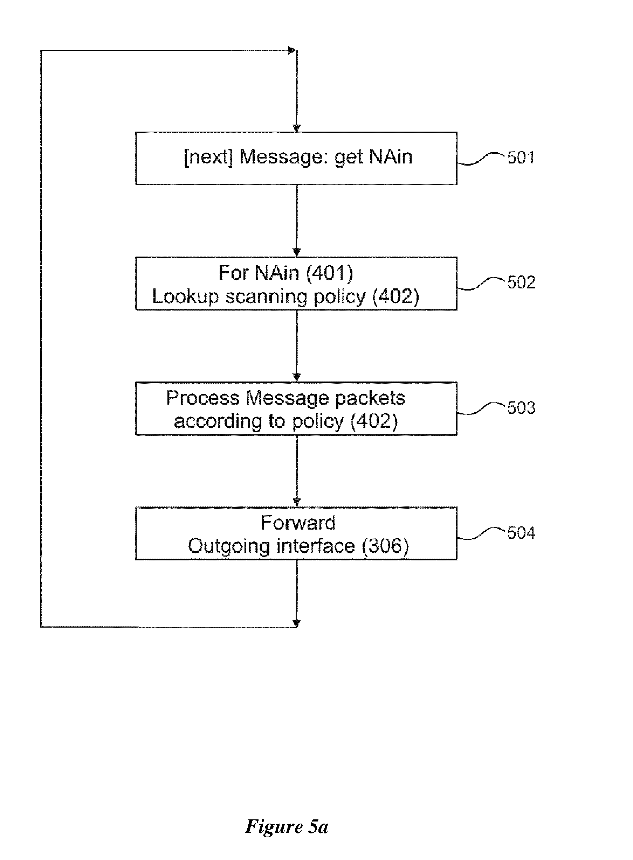

Figure 5a details the processing steps according to one embodiment in which the Packet Forwarding Engine (PFE) 301 of Figure 3 operates with data stored in the memory means 202, 203 or 204 of Figures 2 and 4, including a step of processing a network message with a first network address according to policies.

The service plane 303 is a packet forwarding engine adapted to perform a filtering function according to the present embodiment of the invention, the function being a recursive data processing loop performed upon incoming network messaging from remote subscriber devices 101, 102, 103. Accordingly, a first network message is received by router 107 from a subscriber device 101 at step 501, at which the PFE extracts the terminal first network or source address 401 therefrom, in order to locate and read the message filtering policy variable 402 in data table 304 at step 502.

At step 503, the network message is processed in accordance with the policy variable 402, during which the message may be scanned to determine whether it is legitimate or unsolicited and the policy variable may be reset or updated, as will be described in further detail hereafter. The message is subsequently forwarded to the module 306 for translating the first network address into the second network address, wherein the second network address is selected according to the policy variable update of step 503.

Control returns to step 501 in order to process the next network message received from the same subscriber device 101 or another 102, 103, and so on and so forth.

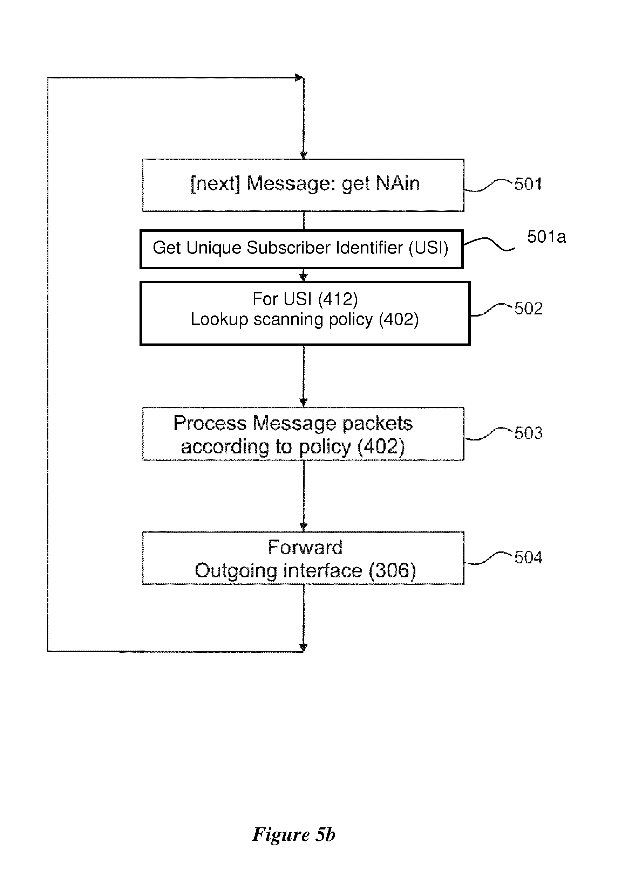

Figure 5b details the processing steps according to another embodiment in which the Packet Forwarding Engine (PFE) 301 of Figure 3 operates in a similar manner to the process described with respect to Figure 5a. In this embodiment a further step 501a takes place where using the private network address 411 a unique subscriber identifier 412 is retrieved. The unique subscriber identifier can be a MSISDN associated with the private network address 411. The MSISDN can be identified by performing a RADIUS lookup.

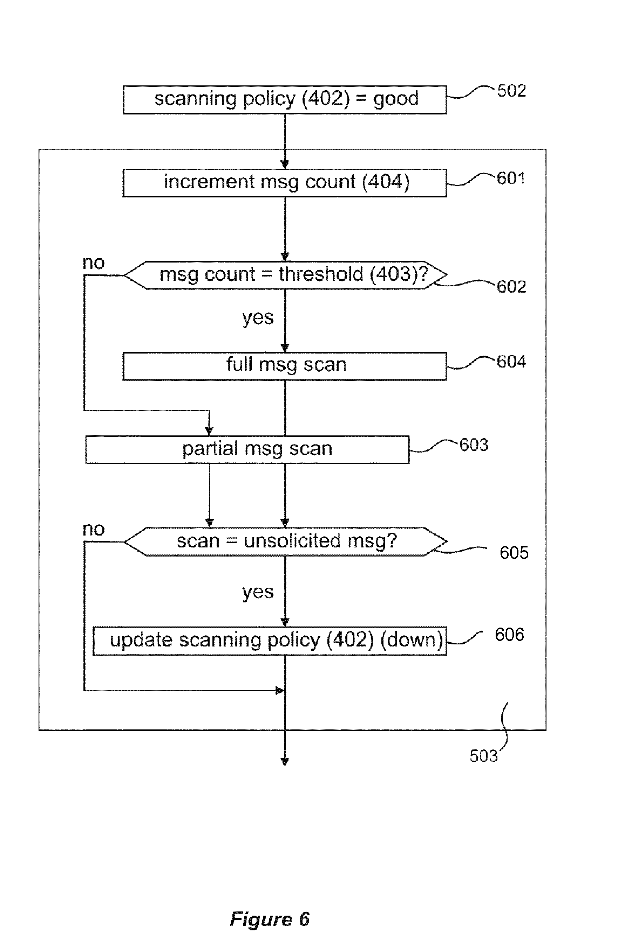

It is the unique subscriber identifier (e.g. MSISDN) which can be associated with a policy, as hereinbefore described. The first network address, which is a private IP address temporarily assigned, is temporarily associated and stored with the identified MSISDN and thus indirectly with the policy, as shown in 411 Figure 4b. However it is the private IP address (first or source network address) that is translated into the second network address that is key to the process of the invention. It will be appreciated that with the unique subscriber identifier (e.g. the MSISDN) the process described with respect to flow charts Figures 6, 7, 8 and 9 can be applied.

In one embodiment the policies are configured, associated with MSISDN(s) each with associated filters. The filters can be configured with associated reputation variables or ranges. It is the subscriber's reputation that can determine which IP address they are associated with. For example, the system can be configured to route messages from senders with a reputation that falls within a defined risk range to a restricted subset of IP addresses. Thus, each entry in the IP pool can be associated with a particular filter risk range. For the purposes of connecting to a destination server (e.g. SMTP server), the system will then assign each message an IP address from the range (or single IP) within the list of IP addresses which corresponds to that message sender's risk level, resulting in translating the private IP address (first or source network address) to the second network address.

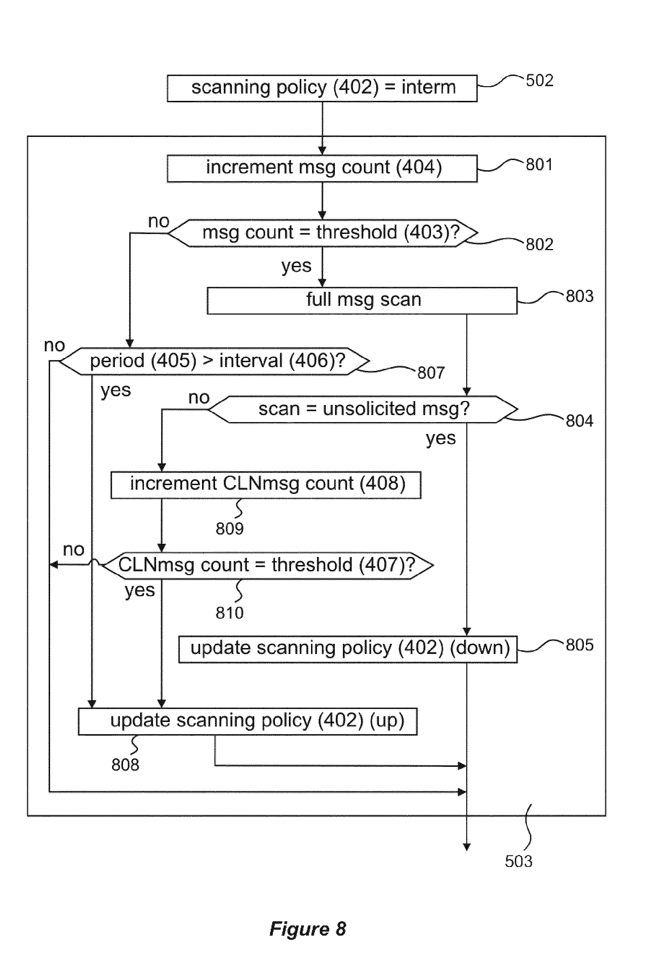

In one embodiment the system may not be able to get the Unique Subscriber Identifier (e.g. MSISDN) for a message e.g. if no RADIUS accounting start was received for that IP address. In this event the system can assign a default policy. The system will then perform the translation according to the invention, for example as per the indeterminate case described in Figure 8.

In one embodiment a configurable reputation value can be assigned to that message, resulting in translating the private IP address (first or source network address) to the second network address associated with that reputation range. In this event the system can assign a default policy. The system will then perform the translation according to the invention, for example as per the indeterminate case described in Figure 8. The reputation value can also be used when applying filters within a policy if the filters have a risk level associated with them.

Figure 6 further details the step 503 of processing message IP addresses according to a first policy associated with legitimate messages.

If the output of the table look-up 502 indicates that the policy is associated with legitimate messages, therefore that the emitting subscriber device 101 is trusted within the private network 106 not to output unsolicited network messaging, then at step 601 the revolving running count 404 for the first network address 401 of that subscriber device 101 is incremented in table 304 and a first question is asked at step 602 as to whether the message scanning threshold 403 has been reached. In the case of this policy, the message scanning threshold 403 is high or important, since the device is trusted not to emit unsolicited messages, which advantageously spares processing resources to handle more unsolicited messages from less trusted subscriber devices 102, 103.

If the question of step 602 is answered negatively, the PFE requests only a partial scan 603 of the message, or may even omit to scan the message entirely to spare still further processing resources. Alternatively, if the question of step 602 is answered positively, then the PFE requests a full scan 604 of the message, in order to revalidate the trusted policy variable 402, or to downgrade it if the scan identifies unsolicited messaging. The scanning operation itself may be performed by a conventional spam filter module or engine, which will be well known to those skilled in the art.

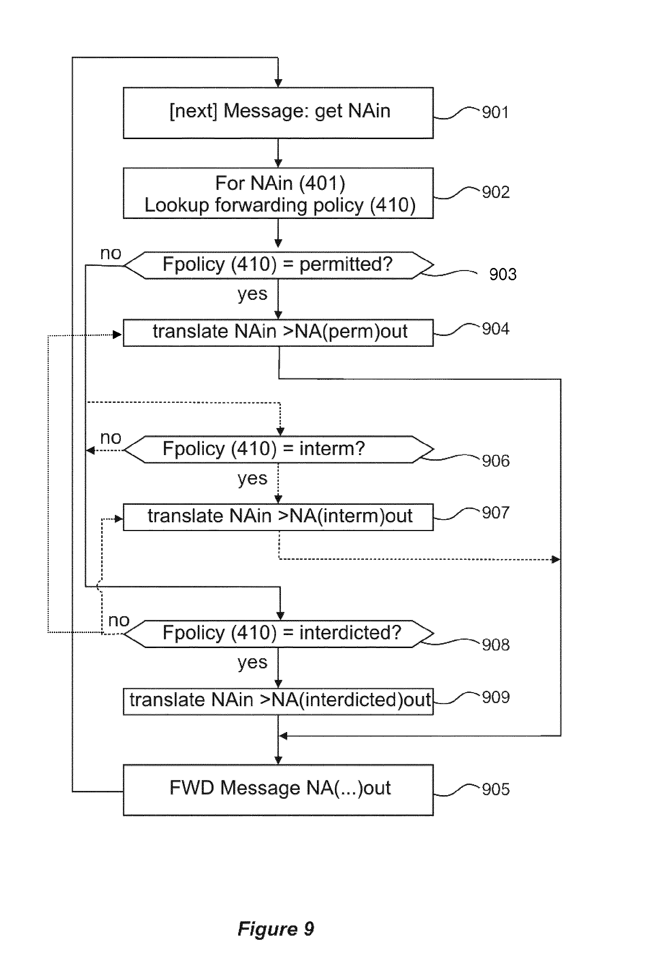

Accordingly, upon completion of the scanning operation 603, 604 a further question is asked at step 605, as to whether the scan classed the message as unsolicited. If the question of step 605 is answered positively, then at step 606 the PFE updates the filtering policy variable 402 in the data table 304 to an alternative variable indicative of a less trusted status, pursuant to which forth coming messages from the same subscriber device 101 will be scanned more frequently. Control proceeds directly to step 504, and the module 306 will translate the less - trusted first network address into either still a permitted, or an interdicted, second network address 409, depending on how aggressive the outcome of the filtering should be, as described in more detail with respect to Figure 9.

Alternatively, if the question of step 605 is answered negatively, the message is legitimate, the message scanning policy variable 402 and message forwarding policy variable 402 and/or 409 do not require updating, and control proceeds to step 504. The module 306 will translate the first network address into a permitted second network address 409, which is unlikely to be included in a Real-Time Black List at RBL server 111 at any time, as described in more detail with respect to Figure 9 below.

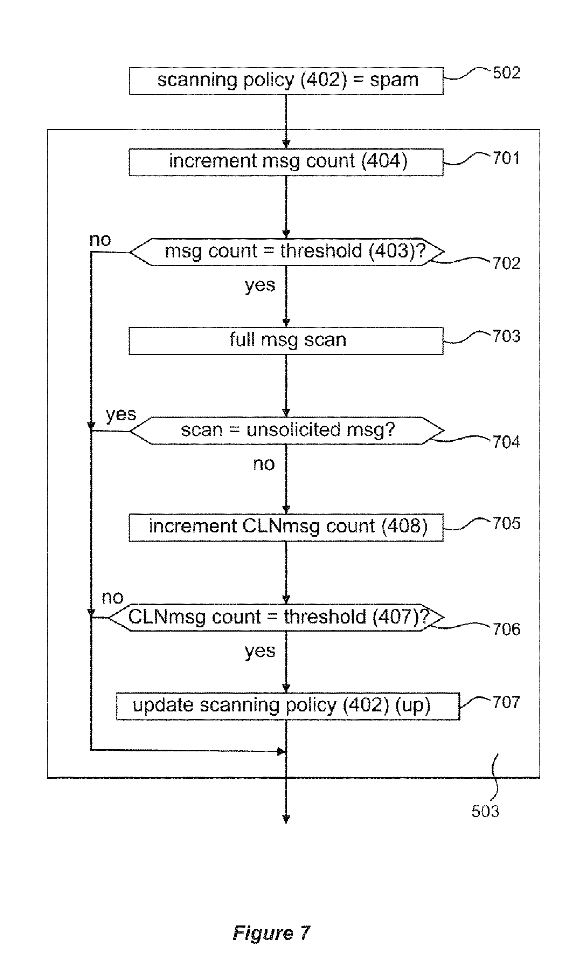

Figure 7 further details the step 503 of processing message IP addresses according to a second policy associated with unsolicited messages.

If the output of the table look-up 502 indicates that the policy 402 is associated with unsolicited messages, therefore that the emitting subscriber device 101 may not be trusted within the private network to output legitimate network messaging, for instance because it outputs unsolicited messages frequently, then at step 701 the revolving running count 404 is incremented as previously described and a first question is asked at step 702, as to whether the message scanning threshold 403 has been reached. In the case of this policy, the message scanning threshold 403 is low or insignificant, since the device is not trusted to emit legitimate messages.

If the question of step 702 is answered negatively, the message scanning policy variable 402 and message forwarding policy variable 402 do not require updating and control proceeds directly to step 504. The message is assumed to be unsolicited and the module 306 will translate the first network address into an interdicted second network address 409 likely to be included, already or shortly, in a Real-Time Black List at RBL server 111.

If the question of step 702 is answered positively, then the PFE requests a full scan 703 of the message, in order to revalidate the policy variable 402, or to upgrade it if the scan identifies legitimate messaging. Accordingly, upon completion of the scanning operation 703, a further question is asked at step 704, as to whether the scan classed the message as unsolicited.

If the question of step 704 is answered positively, the message scanning policy variable 402 does not require updating and control proceeds directly to step 504. The message is known to be unsolicited and the module 306 will translate the first network address into an interdicted second network address 409 likely to be included, already or shortly, in a Real-Time Black List at RBL server 111.

Alternatively, if the question of step 704 is answered negatively, signifying that the message scanned at step 703 is legitimate, then at step 705 the revolving running count 408 of the number of scanned legitimate messages received from the subscriber device 101 is incremented and a question is asked at step 706, as to whether the clean message threshold 407 has been reached.

Accordingly, if the question at step 706 is answered negatively, indicating that the prerequisite number of legitimate messages deemed indicative of a trustworthy subscriber device has not yet been reached, no update of the intermediate filtering and forwarding policies 402 is required and control proceeds directly to step 504. Alternatively, if the question of step 706 is answered positively, signifying that the number of legitimate messages sent by the subscriber device up to this point in time makes it trustworthy, then the PFE updates the filtering policy variable 402 in the data table 304 to an alternative variable indicative of a more - trusted status, pursuant to which forthcoming messages from the same subscriber device 101 will be scanned more infrequently, for instance in accordance with the sequence described in relation to Figure 6, again advantageously sparing processing resources to handle more unsolicited messages from less trusted subscriber devices.

Figure 8 details the step 503 of processing message IP addresses according to an alternative embodiment of the invention comprising a third policy associated with network messaging which is neither known to be trusted, nor known to be unsolicited, hereafter referred to as an intermediate policy.

If the output of the table look-up 502 indicates that the policy is associated with indeterminate messages, therefore that the emitting subscriber device 101 may not yet be trusted within the private network 106 to regularly output legitimate network messaging, for instance because it has not previously output any network messaging, then at step 801 the revolving running count 404 for the first network address 401 or MSISDN address 412 of the emitting subscriber device is incremented as previously described, and a first question is asked at step 802 as to whether the message scanning threshold 403 has been reached. In the case of this policy, the message scanning threshold 403 is moderate, since the device is not trusted to regularly emit legitimate messages, nor known to emit unsolicited messages.

If the question of step 802 is answered positively, then the PFE requests a full scan 803 of the message, in order to set the intermediate policy variable 402, upgrade it, or downgrade it if the scan identifies unsolicited messaging.

Upon completion of the scanning operation 803, a further question is asked at step 804, as to whether the scan classed the message as unsolicited.

If the question of step 804 is answered positively, then at step 805 the PFE updates the filtering policy variable 402 in the data table 304 to an alternative variable indicative of a less - trusted status, pursuant to which forthcoming messages from the same subscriber device 101 will all be scanned and, optionally, automatically blocked by the PFE itself or the module 306, for example substantially according to the procedure described in connection with Figure 7.

If the question of step 802 is answered negatively, signifying that the message scanning threshold 403 has not been reached yet, then a next question is asked at step 807 as to whether the reset period 406 has been exceeded by comparison with the time stamp 405 for the first network address 401 of the originating subscriber device. If the question of step 807 is answered negatively, no update of the filtering and forwarding policies 402 is yet required and control subsequently proceeds to step 504. Alternatively, if the question of step 807 is answered positively, the originating subscriber device 101 may be better trusted than previously to send legitimate messaging, as it has not sent unsolicited messages for a predetermined period of time deemed sufficient to grant this additional level of trust. Accordingly, at step 808 the PFE updates the filtering policy variable 402 in the data table 304 to an alternative variable indicative of a more trusted status, for instance associated with the legitimate messaging policy described in connection with Figure 6, pursuant to which less of the forthcoming messages from the same subscriber device 101 will be scanned, again advantageously sparing processing resources to handle more unsolicited messages from less trusted subscriber devices. If the question of step 804 is answered negatively, signifying that the message scanned at step 803 is legitimate, then at step 809 and 810 further processing is performed.

Figure 9 details the processing steps according to which the processing engine 302 of Figure 3 operates with data stored in the memory means of router 107 of Figures 4a and 4b, including a step of forwarding a network message with a second network address.

The module 306 is adapted to perform a network address translation function, being a recursive data processing loop performed upon incoming network messaging from remote subscriber devices 101, 102, 103 further to their processing by the PFE as described in relation with Figures 5 to 7 and/or 8. The processing loop may be performed synchronously or asynchronously with the PFE processing loop, in a serial or parallel manner depending upon the best use that may be made of router components 201 to 209.

Accordingly, a first network message is received from a subscriber device 101 at step 901, at which the module extracts the terminal first network address 401 or unique subscriber identifier 412 therefrom, as hereinbefore described with respect to Figures 5 to 8.

A first question is asked at step 903, as to whether the forwarding policy variable 402 is indicative of a legitimate messaging. If the question of step 903 is answered positively, then at step 904 the module 306 translates the first network address 401 associated with the incoming message into a permitted second network address 409 associated with legitimate network messaging for a trusted subscriber device, by cross-referencing the message filter policy variable 402 associated with the first network address 401 in table 304 with the message forwarding policy variable 410 associated with the second network address 409 in table 305. Control subsequently proceeds to step 905, at which the module forwards the message with the permitted second network address 409, which is unlikely to be included into a Real-Time Black List at RBL server 111.

Alternatively, the question of step 903 is answered negatively and, with reference to the alternative embodiment described in relation to Figure 8, a next question may optionally be asked at step 906, as to whether the forwarding policy variable 410 is indicative of an intermediate policy. If the question of step 906 is answered positively, the module 306 translates the first network address 401 associated with the incoming message into a semi-trusted second network address 409 associated with network messaging for a semi-trusted subscriber device at step 907. Control subsequently proceeds to step 905, at which the module forwards the message with the semi-trusted second network address 409, which may eventually be included into a Real-Time Black List at RBL server 111 if the message was not scanned at step 803 and is later determined to be unsolicited by the destination SMTP server 108 or 109.

Alternatively still, the question of step 903 (or 906 in the above embodiment) is answered negatively, whereby a next question is asked at step 908, as to whether the forwarding policy variable is indicative of an unsolicited messaging. If the question of step 908is answered positively, the module 306 translates the first network address 401 associated with the incoming message into a interdicted second network address 409 associated with unsolicited network messaging from an untrustworthy subscriber device at step 909. Control subsequently proceeds to step 905, at which the module forwards the message with the interdicted second network address 409, which will be included or may already be included into a Real-Time Black List at RBL server 111. Usefully, the module 306 may block the message instead of forwarding it, and either notify the originating subscriber device to prompt remedial action, or not notify the originating subscriber device and drop the message packets silently, for instance if the malicious process operating thereon is deemed likely to react to such a notification by modifying its behaviour and keep originating unsolicited network messaging.

The question of step 908 may occasionally be answered negatively, for instance in the case of a message incorrectly routed through the fast path 302 and not submitted to the PFE processing described above, and/or in the case of a message originating from a new or unknown subscriber device for the first network address 401 of which no messaging and forwarding policy variables 402, 410 have yet been set. In such instances, control may return to step 904 (process the message as legitimate by default) or step 909 (process the message as unsolicited by default), depending on how aggressive the outcome of the filtering should be, whereby the module 306 again translates the first network address 409 associated with the incoming message into, respectively, a permitted or interdicted second network address 409 associated with network messaging from, respectively, a trusted or mistrusted subscriber device. In the case of the alternative embodiment including steps 906 and 907, then in such instances control may return to step 907, whereby the module 306 again translates the first network address 409 associated with the incoming message into a semi-trusted second network address 409 associated with network messaging for a semi-trusted subscriber device.

Accordingly, the present invention implements a system for filtering spam or unsolicited network messaging, by assigning a different originating IP address to messages exiting the operator domain, based on the determination by the system, of the likelihood of the message sender being perceived as generating unsolicited network messages or not.

To protect the external network addresses of the operator from being blacklisted, the network messages of suspicious senders are effectively restricted to a set of interdicted IP addresses, such that not all network addresses of the operator will be blacklisted, whereby operator subscribers emitting legitimate messages will obtain a better quality of network messaging service. The source NAT address pool 305 contains a list of network addresses 409, which are used by the filtering process when connecting to the destination SMTP server 108, 109. Associated with each entry in the list is a variable (not shown) defining a risk level, for instance expressed within a range, and according to which the process selects the external network address.

In this specification the terms 'messaging' and 'messages' should be afforded a broad interpretation to include any type of electronic message capable of being sent over a network, for example, but not limited to, e-mail and/or MMS messages. The system of the invention can operate as a standalone unit or operate close or within a standard firewall provided by network operators.

The embodiments in the invention described with reference to the drawings comprise a computer apparatus and/or processes performed in a computer apparatus. However, the invention also extends to computer programs, particularly computer programs stored on or in a carrier adapted to bring the invention into practice. The program may be in the form of source code, object code, or a code intermediate source and object code, such as in partially compiled form or in any other form suitable for use in the implementation of the method according to the invention. The carrier may comprise a storage medium such as ROM, e.g. CD ROM, or magnetic recording medium, e.g. a floppy disk or hard disk. The carrier may be an electrical or optical signal which may be transmitted via an electrical or an optical cable or by radio or other means.

In the specification the terms "comprise, comprises, comprised and comprising" or any variation thereof and the terms include, includes, included and including" or any variation thereof are considered to be totally interchangeable and they should all be afforded the widest possible interpretation and vice versa.

The invention is not limited to the embodiments hereinbefore described but may be varied in both construction and detail.

## Claims

1. A system for filtering unsolicited network messaging in a network comprising at least one remote messaging device (101;102;103), at least one data routing device (107) and at least one remote destination device (108; 109),
wherein the remote messaging device (101;102;103), has a first network address and communicates at least one network message intended to reach the at least one remote destination device (108; 109), to the at least one data routing device (107); and
wherein the at least one data routing device (107) translates the first network address into a second network address and forwards the network message to the at least one remote recipient device (108;109);
the system comprising
means for storing a plurality of second network addresses;
means for receiving the at least one network message from the at least one remote data communicating device (101;102;103) under the first network address wherein the first network address comprises the source address of the remote data communicating device (101;102;103);
means for determining a probability of the network message being unsolicited; and
means for translating the source address into a second network address associated with unsolicited network messaging when the probability determining means indicates a high probability of unsolicited network messaging.

2. The system according to claim 1, wherein the plurality of second network addresses includes at least one second network address associated with legitimate network messaging and at least one second network address associated with unsolicited network messaging, the system further comprising
means for translating the source address into the at least one second network address associated with legitimate network messaging, when the probability determining means indicates a low probability of unsolicited network messaging.

3. The system according to claim 1 or 2, wherein the plurality of second network addresses further includes at least one second network address associated with indeterminate network messaging, the system further comprising
means for translating the source address into the at least one second network address associated with indeterminate network messaging, when the probability determining means cannot indicate a probability of unsolicited network messaging.

4. The system according to any of claims 1, 2 or 3, wherein the means for determining includes a message scanning application and a data table storing respective first network addresses of remote messaging devices, the data table further storing, for each first network address, a variable defining the scanning policy of the message scanning application for any network messaging received from the remote messaging device assigned the first network address.

5. The system according to claim 4, wherein the means for storing a plurality of second network addresses includes a data table storing second network addresses or ranges of second network addresses, the data table further storing, for each second network address or range thereof, a variable defining the translating policy of the translating means, equivalent to the variable defining the scanning policy of the message scanning application and optionally
wherein the variable defining the scanning policy and the variable defining the translating policy jointly define ranges of second network addresses, categorised according to the likelihood of the network message with which they are associated constituting unsolicited messaging or not.

6. The system according to any of claims 1 to 5, wherein the storing means, receiving means, determining means and translating means are embodied in a network router and/or
wherein the determining means are embodied in a packet forwarding engine (301) of the networking router and the translating means are embodied in a firewall module of the network router.

7. The system as claimed any preceding claim comprising means for identifying a unique subscriber identifier identifying the remote data communicating device and/or wherein the unique subscriber identifier comprises a MSISDN of said remote data communicating device (101;102;103) and/or
wherein the means for determining comprises associating the unique subscriber identifier with a policy to determine the means for translating the source address to the second network address and/or
wherein the means for determining comprises associating the unique subscriber identifier with a reputation variable that determines a message risk level and said means for translating assigns a second network address from a list of second network addresses which corresponds to that message sender's risk level.

8. The system as claimed in any preceding claim wherein the first network address or source address comprises a private IP address temporarily assigned, and is temporarily associated and stored with the source address and/or wherein the private IP address is associated with a unique subscriber identifier identified for the remote communicating device (101;102;103), and/or
wherein the unique subscriber identifier comprises a MSISDN of said remote data communicating device (101;102;103),.

9. The system as claimed in any of claims 1 to 8 wherein the means for determining comprises associating the first network address with a reputation variable or policy and/or
wherein the reputation variable or policy determines the message sender's risk level, resulting in translating the first or source network address to the second network address associated with unsolicited messaging when the reputation variable or policy indicates a high probability of unsolicited network messaging and/or
wherein the reputation variable or policy determines the message sender's risk level, resulting in translating the first or source network address to the second network address associated with legitimate network messaging when the reputation variable or policy indicates a low probability of unsolicited network messaging and/or
wherein the reputation variable or policy determines the message sender's risk level, resulting in translating the first or source network address to the second network address associated with indeterminate network messaging when the reputation variable or policy indicates a probability of unsolicited network messaging.

10. A method of filtering unsolicited network messaging in a networked data routing device, comprising the steps of
receiving at least one network message from a remote data communicating device having a first network address;
storing a plurality of second network addresses in memory means,
determining a probability of the network message being unsolicited; and
translating the first network address, wherein the first network address comprises the source address of the remote data communicating device, into a second network address associated with unsolicited network messaging when the determining step indicates a high probability of unsolicited network messaging.

11. The method according to claim 10, wherein the plurality of second network addresses includes at least one second network address associated with legitimate network messaging and at least one second network address associated with unsolicited network messaging,
the method comprising the further step of translating the source address into a second network address associated with legitimate network messaging, when the probability determining step indicates a low probability of unsolicited network messaging.

12. The method according to claim 10 or 11, wherein the plurality of second network addresses further includes at least one second network address associated with indeterminate network messaging,
the method comprising the further step of translating the source address into the at least one second network address associated with indeterminate network messaging, when the probability determining step cannot indicate a probability of unsolicited network messaging.

13. The method according to any of claims 10, 11 or 12, comprising the further step of storing, for each first network address, a variable defining the scanning policy of a message scanning application for determining the probability of the network message, received from a remote messaging device assigned the first network address, being unsolicited.

14. The method according to any of claims 10 to 13, comprising the further step of forwarding the network message with the second network address.
and/or comprising the step of identifying a unique subscriber identifier identifying the remote data communicating device.
and/or wherein the unique subscriber identifier comprises a MSISDN of said remote data communicating device.
and/or wherein the step for determining comprises associating the unique subscriber identifier with a policy to determine the translating of the source address to the second network address
and/or wherein the determining step comprises associating the unique subscriber identifier with a reputation variable that determines a message risk level and said translating assigns a second network address from a list of second network addresses which corresponds to that message sender's risk level.

15. A set of instructions recorded on a carrier or stored in a memory for a programmable networked data processing terminal which, when processed by processing means of the data processing terminal, causes the data processing terminal to perform the steps according to any of claims 10 to 14.
